# EUROPÄISCHE PATENTANMELDUNG

(11) **EP 0 758 540 A2**
(43) Veröffentlichungstag der Anmeldung: **19.02.1997**
(21) Anmeldenummer: 96110529.3
(22) Anmeldetag: 28.06.1996
(51) Int. Cl.: A61C 1/05

(54) **Ärztliches, insbesondere zahnärztliches Turbinen-Handstück**

(30) Priorität: 11.08.1995 DE 19529668
(71) Anmelder: KALTENBACH & VOIGT GMBH & CO., D-88400 Biberach (DE)
(72) Erfinder: Lingenhöle, Bernhard, 88447 Warthausen-Birkenhard (DE); Mohr, Eugen, 88444 Ummendorf (DE)
(74) Vertreter: Schmidt-Evers, Jürgen, Dipl.-Ing.

(57) **Zusammenfassung**

Bei einem ärztlichen, insbesondere zahnärztlichen Turbinen-Handstück, mit einer Zuführ-Leitung (8) und einer Abführleitung (9) für die Turbinen-Druckluft, wobei in einer Leitung ein Ventil (12) angeordnet ist, welches von einem pneumatischen Parameter in der anderen Leitung steuerbar ist, istdas Ventil (12) in der der Abführ-Leitung (9) angeordnet, und es ist so steuerbar, daß es schließt, wenn ein Grenzwert des Parameters in der Zuführ-Leitung (8) einen Mindestwert unterschreitet.

## Beschreibung

Die Erfindung bezieht sich auf ein Turbinen-Handstück nach dem Oberbegriff des Anspruchs 1.

Ein Turbinen-Handstück dieser Art ist in der US 3 865 505 beschrieben. Bei diesem bekannten Turbinen-Handstück ist das Ventil im zuführenden Leitungsabschritt angeordnet, und es ist durch eine Verstellvorrichtung in Abhängigkeit des im abführenden Leitungsabschnitt herrschenden Druckes oder der darin enthaltenen Strömungsgeschwindigkeit derart gesteuert, daß es mit abnehmenden Druck oder mit abnehmender Strömungsgeschwindigkeit zunehmend geöffnet wird und mit zunehmendem Druck und zunehmender Strömungsgeschwindigkeit abnehmend geschlossen wird. Hierdurch ist ein Drehzahlregler für die Drehzahl des Behandlungswerkzeugs vorgegeben.

Bei einem vorliegenden Turbinenantrieb kommt es dann, wenn das Turbinenrad abgeschaltet wird, zu einem Nachlaufen des Turbinenrades, was auf der im Antrieb gespeicherten Schwingmasse beruht. Während dieses Nachlaufens drückt bzw. pumpt das Turbinenrad Luft in den abführenden Leitungsabschnitt, so daß in dem Raum, in dem sich das Turbinenrad befindet, ein Unterdruck entsteht, der sich durch Ansaugen von Luft durch den vorhandenen Ringspalt zwischen der Antriebswelle und dem Gehäuse zu füllen sucht. Dieser Saugluftstrom fördert das Eindringen von Schmutz und/oder Flüssigkeit in die Turbinenkammer. Dies ist unerwünscht, weil diese Verunreinigungen aus dem Patientenmund stammende Krankheitserreger enthalten können, die bei der Behandlung des nächsten Patienten aus dem Turbinen-Handstück austreten und diesen Patienten kontaminieren können.

Der Erfindung liegt die Aufgabe zugrunde, ein Turbinen-Handstück der eingangs angegebenen Art so auszugestalten, daß der Nachsaugeffekt wesentlich verringert oder vermieden wird.

Diese Aufgabe wird durch die Merkmale des Anspruchs 1 gelöst.

Bei der erfindunsgemäßen Ausgestaltung wird die Abführ-Leitung durch das Ventil in Abhängigkeit von dem in der anderen Leitung enthaltenen pneumatischen Parameter so gesteuert, daß bei einer Einschaltung der Druckluft-Zuführung die Abführ-Leitung geöffnet und bei einer Abschaltung geschlossen wird. Infolgedessen kann das nachlaufende Turbinenrad keine Luft in die Abführ-Leitung fördern, und deshalb kann im das Turbinenrad enthaltenden Innenraum weder ein Unterdruck noch eine Nachsaugströmung entstehen.

Die erfindungsgemäße Ausgestaltung ist nicht nur aus den vorgenannten Gründen vorteilhaft, sondern sie ist auch von einfacher und kleiner sowie zuverlässig funktionierender Bauweise langer Lebensdauer, die sich kostengünstig herstellen und montieren läßt.

In den Unteransprüchen sind Merkmale enthalten, die die erfindungsgemäße Funktion weiter verbessern und auch eine alternative Ausgestaltung für ein Ventil beziehen, das von besonders einfacher Bauweise ist.

Nachfolgend werden die Erfindung und weitere durch sie erzielbare Vorteile anhand von Ausführungsbeispielen und einer Zeichnung näher erläutert. Es zeigt:
- Fig. 1: ein erfindungsgemäß ausgestaltetes zahnärztliches Behandlungsinstrument in Form eines Winkel-Handstücks im vertikalen Schnitt, teilweise nur in andeutungsweiser Darstellung;
- Fig. 2: das Winkel-Handstück nach Fig. 1 im horizontalen Schnitt und in der Draufsicht;
- Fig. 3: das Winkel-Handstück nach Fig. 2 in einer anderen Funktionsdarstellung;
- Fig. 4: ein Handstück im horizontalen Schnitt in der Draufsicht und in abgewandelter Ausgestaltung eines Ventils;
- Fig. 5: das Handstück nach Fig. 4 im geschlossenen Zustand des Ventils.

Die Hauptteile des allgemein mit 1 bezeichneten ärztlichen, insbesondere zahnärztlichen Behandlungsinstruments sind ein Handstück 2 mit einem sogenannten Winkelkopf 3, einer im Winkelkopf 3 drehbar gelagerten Antriebswelle 4, die die Wandung des Winkelkopfes 3 nach außen durchsetzt und mit der koaxial ein Behandlungswerkzeug 5 durch eine geeignete, im einzelnen nicht dargestellte Spannvorrichtung verbindbar ist, ein in einer Kammer 6 des Winkelkopfes 3 mit der Antriebswelle 4 drehbar gelagertes Turbinenrad 7, das mit einer sich längs durch das Handstück 2 an geeigneter Stelle in die Kammer 6 erstreckenden Zuführ-Leitung 8 für Druckluft und einer sich entgegengesetzt erstreckenden Abführ-Leitung 9 eine Druckluft-Turbine 11 bildet und ein Ventil 12 zum Verschließen der Abführ-Leitung 9, wenn die Druckluft-Zuführung durch die Zuführ-Leitung 8 abgeschaltet wird. Letzteres kann durch die Betätigung eines schematisch dargestellten Ventils 13 erfolgen, das für eine manuelle Betätigung im Bereich des Handstücks 2 und für eine Fußbetätigung im Bodenbereich eines zugehörigen Behandlungsstuhls angeordnet sein kann. Die Abführ-Leitung 9 erstreckt sich von einer Auslaßöffnung 10 in mittlerer Position in der Umfangswandung 6a der Kammer 6.

Der hintere Endbereich des Behandlungsinstruments 1 oder Handstücks 2 ist nur vereinfacht dargestellt. Im hinteren Endbereich ist an das Handstück 2 eine flexible Versorgungsleitung 14 angeschlossen, die sich von einer Versorgungseinrichtung für einen zahnärztlichen Behandlungsplatz erstreckt.

Wie aus den Figuren zu entnehmen ist, ist das Ventil 12 in der Abführ-Leitung 9 angeordnet, und es ist im Sinne eines pneumatischen Zylinders ausgebildet, mit einem Kleinen Gehäuse 16, in dem eine Kolbenscheibe 17 und eine damit verbundene Kolbenstange 18 koaxial verschiebbar geführt sind, wobei die Kolbenstange 18 an ihrem freien Ende ein Verschlußglied 19 trägt und durch eine Feder 20 mit dem Verschlußglied 19 gegen eine Ventilöffnung 21 der Abführ-Leitung 9 vorgespannt ist.

Bei der vorliegenden Ausgestaltung, bei der das Ventil 12 in der Abführ-Leitung 9 angeordnet ist, befindet es sich in einem solchen, nach hinten gerichteten Abstand von einer Ringschulterfläche 22 einer sich in Richtung des Rücklaufs erweiternden Stufenerweiterung der Abführ-Leitung 9, daß das Verschlußglied 19 unter der Wirkung der nach vorne gerichteten Spannung der Feder 20 die Ventilöffnung 21 in seiner vorderen Ausschubstellung verschließt. Diese Stellung nimmt der Kolben 17 bei einer Abschaltung der Druckluft-Zuführung durch das Ventil 13 selbsttätig ein. Die Feder 20 ist vorzugsweise in der hinteren Kammer 24a des Zylindergehäuses 16 angeordnet. Die vordere Kammer 24b steht durch eine Verbindungsleitung 25 mit der Zuführ-Leitung 8 in stetiger Verbindung.

Während der Druckluftbeaufschlagung der Turbine 11 gelangt der Luftdruck durch die Verbindungsleitung 25 in die vordere Kammer 24b des Zylindergehäuses 16, wodurch der Kolben 17 gegen die Kraft der Feder 20 in seine hintere Stellung gedrückt wird, in der das Verschlußglied 19 die Ventilöffnung 21 freigibt, wobei die Abluft der Turbine 11 durch die Abführ-Leitung 9 abgeführt wird.

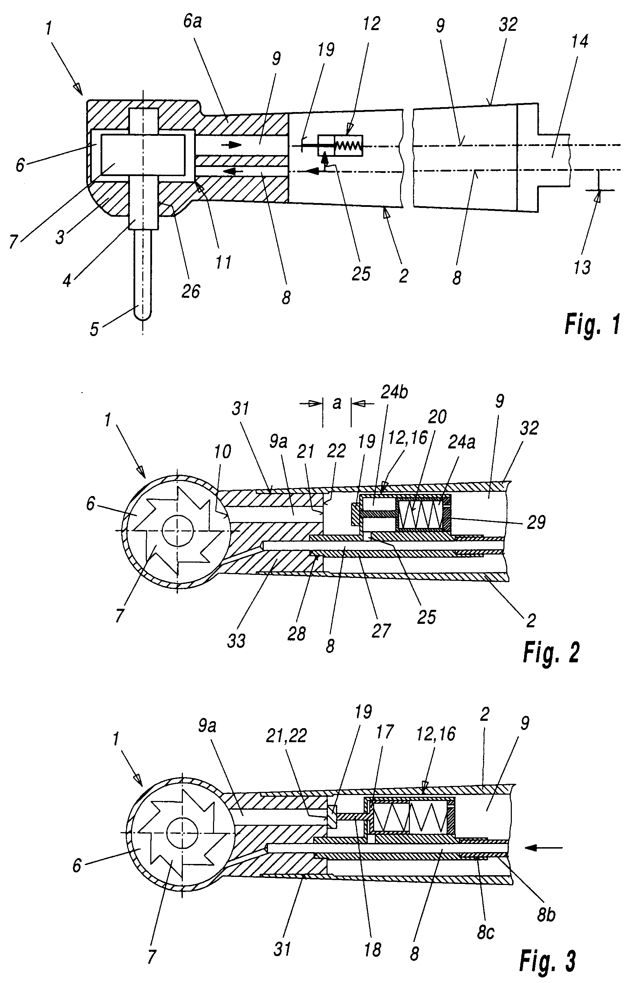

Es ist zu bemerken, daß bezüglich der Zeichnungsebene in Fig. 1 vor und hinter dem Ventilgehäuse 16 jeweils ein genügend großer freier Querschnitt der Abführ-Leitung 9 vorhanden ist, so daß die Druckluftabführung durch das Vorhandensein des Zylindergehäuses 16 in der Abführ-Leitung 9 die Abluftabführung kaum beeinträchtigt.

Sobald die Druckluftzufuhr mit dem Ventil 13 abgeschaltet wird, verschiebt die Feder 20 die Kolbenstange 18 mit dem Verschlußglied 19 selbsttätig in die Schließstellung gemäß Fig. 3. Während des Auslaufens des mit hoher Drehzahl routierenden Turbinenrades 7 kann somit keine Luft aus der Kammer 6 in die Abführ-Leitung 9 gepumpt werden. Infolgedessen kann das auslaufende Turbinenrad 11 auch keinen Unterdruck in der Kammer 6 erzeugen, und deshalb unterbleibt auch ein Nachsaugen von Luft im Bereich der werkzeugseitigen Lagerspalte 26 der Antriebswelle 4. Infolgedessen werden auch keine Verunreinigungen in die Lagerspalte 26 bzw. in die Kammer 6 eingesaugt.

Wie aus den Fig. 2 und 3 deutlich zu entnehmen ist, ist das Zylindergehäuse 16 an einem die Zuführ-Leitung 8 abschnittsweise bildenden Rohrstück 27 angeordnet, das in eine Bohrungserweiterung 28 am rückseitigen Ende des Winkelkopfes 3 dicht eingesetzt ist. Dabei ist das mit dem Zylindergehäuse 16 eine Baueinheit bildende Rohrstück 27 gegen ein Verdrehen um seine Längsmittelachse durch nicht dargestellte Begrenzungsflächen gesichert. Aufgrund dieser Ausgestaltung bedarf es keiner besonderen Positionierung des Zylindergehäuses 16. Aufgrund des vorgegebenen Abstands der koaxial zum Abführ-Leitungsabschnitt 9a im Winkelkopf 3 angeordneten Kolbenstange 18, ist deren Position durch die Montage des Rohrstücks 27 gewährleistet. Eine besondere Montage des Zylindergehäuses 16 bedarf es nicht.

Wie aus den Fig. 2 und 3 weiter zu entnehmen ist, kann das Zylindergehäuse 16 einteilig mit dem Rohrstück 27 ausgebildet bzw. daran angeformt sein. Die gemeinsame Zylinderkammer des Zylindergehäuses 16 ist rückseitig durch eine eingesetzte Verschlußwand 29 verschlossen, die eine Entlüftungsöffnung aufweist.

Rückseitig kann an das Rohrstück 27 ein weiterer Zuführ-Leitung sabschnitt 8b durch eine Steckmuffenverbindung 8c angeordnet sein.

Der Winkelkopf 3 ist durch eine Steckverbindung 31 mit einer Griffhülse 32 des Handstücks 2 verbunden, wobei die Griffhülse 32 einen rückseitigen Einsteckzapfen 33 des Winkelkopfes 3 dicht übergreift und z.B. durch einen Preßsitz oder eine Verschraubung fest verbunden ist.

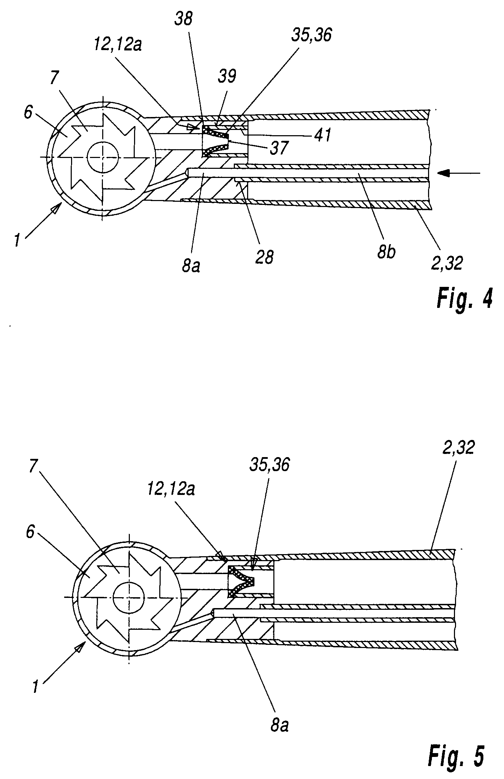

Beim Ausführungsbeispiel gemäß den Fig. 4 und 5 kommt ein abgewandeltes vereinfachtes Ventil 12 zum Einsatz. Hierbei handelt es sich um ein sogenanntes Lippenventil 12a, das eine oder mehrere Lippen 35 aufweist, die Teil einer in Umfangsrichtung geschlossenen Mundwandung 36 sind und aufgrund einer inneren Elastizität so gegeneinander vorgespannt sind, daß sie dicht aneinander anliegen und die von ihnen umgebene Ventilöffnung 37 schließen. Die Mundwandung 36 geht konvergent von einem vorzugsweise kreisrunden Fußflansch 38 aus, der passend in eine Kanalerweiterung 39 des im Winkelkopf 3 verlaufenden Abführ-Leitungsabschnitts 9a eingesetzt ist. Zur axialen Fixierung des Fußflansches 38 ist eine Hülse 41 in die vorzugsweise kreisrunde Kanalerweiterung 39 fest eingesetzt, z.B. eingeklemmt oder geklebt.

Im Funktionsbetrieb der Turbine 11 wird das Lippenventil 12a durch den in der Abführ-Leitung 9 vorhandenen Rücklaufdruck der Abluft geöffnet, wie es Fig. 4 zeigt. Nach der Abschaltung der Druckluft-Zuführung durch das Ventil 13 nimmt das Lippenventil 12a selbsttätig seine Schließstellung ein, wodurch die Abführ-Leitung 9 verschlossen wird und ebenfalls keine Luft durch das auslaufende Turbinenrad 7 aus der Kammer 6 in die Abführ-Leitung 9 nachgepumpt werden kann. Infolgedessen kann auch bei diesem Ausführungsbeispiel beim Auslaufen des Turbinenrads 7 in der Kammer 6 kein Unterdruck und somit auch keine Nachsaugung von Luft im Lagerspalt 26 stattfinden.

Das Lippenventil 12a besteht vorzugsweise aus einem geeigneten Kunststoff, der die Elastizität der Lippen 35 aufzubringen vermag und eine einstückige Herstellung des Lippenventilkörpers ermöglicht.

Das Rohrstück 27 und das Zylindergehäuse 16 mit der Kolbenscheibe 17, der Kolbenstange 18 und dem Verschlußglied 19 sowie der Verschlußwand 29 können aus Metall oder auch Kunststoff bestehen.

Bei der Ausgestaltung gemäß Fig. 4 und 5 ist der in der Griffhülse 32 verlaufende Abschnitt 8b der Zuführ-Leitung 8 durch ein Röhrchen oder einen Schlauch gebildet, der in die Bohrungserweiterung 28 dicht und fest eingesetzt ist.

In Fig. 1 sind aus Gründen der Offensichtlichkeit die Zuführ-Leitung 8 und die Abführ-Leitung 9 übereinander angeordnet Diese Ausgestaltung ist funktionsfähig, jedoch ist es vorteilhafter, die Leitungen 8, 9 in einer Ebene anzuordnen, vorzugsweise in der Mittelebene des Turbinenrads 7, wie es die Fig. 2 bis 5 zeigen.

## Patentansprüche

1. Ärztliches, insbesondere zahnärztliches Turbinen-Handstück, mit einer Zuführ-Leitung (8) und einer Abführ-Leitung (9) für die Turbinen-Druckluft, wobei in einer Leitung ein Ventil (12) angeordnet ist, welches von einem pneumatischen Parameter in der anderen Leitung steuerbar ist,
**dadurch gekennzeichnet,**
daß das Ventil (12) in der Abführ-Leitung (9) angeordnet ist und so steuerbar ist, daß es schließt, wenn ein Grenzwert des Parameters in der Zuführleitung (8) einen Mindestwert unterschreitet.

2. Turbinen-Handstück nach Anspruch 1.
**dadurch gekennzeichnet,**
daß das Ventil (12) in Abhängigkeit vom Druck, der Strömungsgeschwindigkeit oder der Strömungsmenge in der Zuführ-Leitung (8) gesteuert ist bzw. funktioniert.

3. Turbinen-Handstück nach Anspruch 1 oder 2.
**dadurch gekennzeichnet,**
daß das Ventil (12) ein lediglich die Funktion auf und zu erfüllendes Abschaltventil ist.

4. Turbinen-Handstück nach einem der vorherigen Ansprüche.
**dadurch gekennzeichnet,**
daß das Ventil (12) in Strömungsrichtung hinter der Ausgangsöffnung (10) der Abführ-Leitung (9) angeordnet ist.

5. Turbinen-Handstück nach einem der vorherigen Ansprüche.
**dadurch gekennzeichnet,**
daß das Ventil (12) ein Verschlußglied (19) aufweist, das durch eine Federkraft (20) in seine Schließstellung beaufschlagt ist.

6. Turbinen-Handstück nach einem der vorherigen Ansprüche.
**dadurch gekennzeichnet,**
daß das Ventil (12) durch den Druck in der Zuführ-Leitung (8) in seine Offenstellung beaufschlagt und durch einen Kanal (25) mit der Zuführ-Leitung (8) verbunden ist.

7. Turbinen-Handstück nach Anspruch 6.
**dadurch gekennzeichnet,**
daß das Ventil (12) durch eine Zylinder-Kolbeneinheit (16) gebildet ist.

8. Turbinen-Handstück nach einem der vorherigen Ansprüche.
**dadurch gekennzeichnet,**
daß das Ventil (12) in Strömungsrichtung hinter der Öffnung angeordnet ist, mit der die Abführ-Leitung (9) mit der Kammer (6) verbunden ist.

9. Turbinen-Handstück nach Anspruch 8,
**dadurch gekennzeichnet,**
daß das Ventil (12) in Strömungsrichtung hinter einer Stufenfläche (22) einer sich in Strömungsrichtung im Querschnitt erweiterten Abführ-Leitung (9) angeordnet ist.

10. Turbinen-Handstück, insbesondere nach einem der vorherigen Ansprüche.
**dadurch gekennzeichnet,**
daß das Ventil (12) an einem die Zuführ-Leitung (8) enthaltenden Wandteil oder Rohrstück (27) angeordnet ist, wobei vorzugsweise die Verbindungsleitung (25) durch ein Loch in der Wandung des Wandteils oder Rohrstücks (27) gebildet ist.

11. Turbinen-Handstück nach Anspruch 10,
**dadurch gekennzeichnet,**
daß das Gehäuse der Zylinder-Kolbeneinheit (16) einstückig mit dem Wandteil oder dem Rohrstück (27) ausgebildet ist.

12. Turbinen-Handstück nach einem der vorherigen Ansprüche.
**dadurch gekennzeichnet,**
daß es ein Kopfstück (3) und eine Griffhülse (32) aufweist, die vorzugsweise durch eine Steckverbindung (31) insbesondere lösbar miteinander verbunden sind, wobei vorzugsweise das Ventil (12) von dem durch ein Öffnen der Verbindung geschaffenen offenen Ende her montiert bzw. montierbar oder zugänglich ist.

13. Turbinen-Handstück nach einem der vorherigen Ansprüche.
**dadurch gekennzeichnet,**
daß das Ventil (12) durch ein Lippenventil (12a) mit einer oder mehreren Lippen (35) gebildet ist, die im drucklosen Zustand durch eine vorzugsweise in die Lippen integrierte Federspannung geschlossen sind und bei eingeschalteter Druckluft-Versorgung durch den Abführungs-Druck geöffnet werden.

14. Turbinen-Handstück nach Anspruch 13,
**dadurch gekennzeichnet,**
daß die Lippen (35) konvergent von einem vorzugsweise runden Flanschteil (38) ausgehen.

15. Turbinen-Handstück nach Anspruch 14.
**dadurch gekennzeichnet,**
daß das Lippenventil (12a) einstückig aus Gummi oder Kunststoff besteht.

16. Turbinen-Handstück nach einem der Ansprüche 13 bis 15.
**dadurch gekennzeichnet,**
daß das Lippenventil (12a) in einer Kanalerweiterung (39) der Abführ-Leitung (9) angeordnet und darin axial gesichert ist, vorzugsweise durch eine eingesetzte Hülse (41).
